# FASCICULE DE BREVET EUROPEEN

(11) **EP 3 828 067 B1**
(45) Date de publication et mention de la délivrance du brevet: **19.07.2023**
(21) Numéro de dépôt: 20210044.2
(22) Date de dépôt: 26.11.2020
(51) Int. Cl.: B62J 27/20, B62J 9/21, B62K 3/00

(54) **SYSTÈME DE PROTECTION, VÉHICULE ET UTILISATION METTANT EN OEUVRE UN TEL SYSTÈME DE PROTECTION**
SCHUTZSYSTEM, FAHRZEUG UND ANWENDUNG ZUR UMSETZUNG EINES SOLCHEN SCHUTZSYSTEMS
PROTECTION SYSTEM, VEHICLE AND USE IMPLEMENTING SUCH A PROTECTION SYSTEM

(30) Priorité: 27.11.2019 FR 1913303
(43) Date de publication de la demande: 02.06.2021
(73) Titulaire: Helite, 21121 Fontaine-les-Dijon (FR)
(72) Inventeur: THEVENOT, Gérard, 21380 MESSIGNY ET VANTOUX (FR); CAUZA, Chiril, 21121 Fontaine les Dijon (FR); JOLIS, Swann, 74960 MEYTHET (FR); BAVEREL, Camille, 21000 DIJON (FR); LAYLE, Barbara, 21600 LONGVIC (FR); HERPIN, Angélique, 34400 LUNEL (FR); QUEDDIS, Hicham, 21000 DIJON (FR); MAIRET, Isabelle, 21800 QUETIGNY (FR); BEGUE, Emmanuelle, 21600 FENAY (FR)
(74) Mandataire: Plasseraud IP

(56) Documents cités:
- DE-A1-102011 116 444
- DE-U1- 29 904 776
- DE-U1- 29 917 343
- JP-A- 2002 137 780
- JP-A- 2015 145 152
- US-A1- 2004 007 855

## Description

### Domaine technique

L'invention se rapporte à un système de protection, à un véhicule comprenant un tel système de protection et à une utilisation d'un tel système de protection.

### Technique antérieure

L'invention s'applique à la protection d'un utilisateur circulant sur un véhicule pourvu d'un guidon de direction, tel qu'une trottinette ou un vélo mais également une moto, un scooter, une mobylette ou autre.

Face à la densification de la circulation en milieu urbain, les véhicules pourvus d'un guidon de direction, généralement à deux roues, tels que des motos, des scooters ou des mobylettes, ont connu un succès grandissant. En outre, en vue d'optimiser des temps de trajet sur de courtes distances en milieu urbain, d'autres véhicules pourvus d'un guidon de direction, plus petits et plus maniables, tels que des vélos ou des trottinettes, éventuellement motorisés, sont en plein essor.

Le nombre croissant d'utilisateurs de véhicule à deux roues pour les déplacements urbains conduit à une hausse des accidents de la circulation.

Il existe donc un besoin pour améliorer la protection de ces utilisateurs ainsi que celle des autres usagers de la route.

Les documents DE 10 2011 116 444, US 2004/007855, JP 2002 137780 et JP 2015 145152 décrivent des systèmes de protection pour véhicule à deux roues dans lequel une structure de protection gonflable est déployée en cas d'accident pour former un panneau de protection frontale. Le document susmentionné US2004/007855 divulgue un système de protection selon le préambule de la revendication indépendante 1 et fait partie de l'état de l'art le plus proche de l'objet de la revendication indépendante 14.

Les structures de protection des systèmes de protection connus présentent toutefois une conception complexe pour assurer la protection de l'utilisateur et nécessitent un pliage particulier dans l'état inactif du dispositif de protection pour réaliser un déploiement fiable.

### Résumé

L'invention vise à répondre au besoin évoqué ci-dessus.

A cet effet, selon un premier aspect, l'invention concerne un système de protection d'un utilisateur circulant sur un véhicule pourvu d'un guidon de direction, le véhicule comportant un châssis s'étendant selon une direction longitudinale et présentant une partie avant pourvue d'un pivot, et une roue directrice montée pivotante sur le guidon de direction selon un axe de roue perpendiculaire à une direction de déplacement, le guidon de direction étant monté pivotant sur le pivot du châssis pour modifier la direction de déplacement, le système de protection comprenant :
- un support présentant une première direction et configuré pour être monté sur un emplacement du véhicule choisi parmi la partie avant du véhicule et le guidon de direction la première direction étant confondue avec la direction longitudinale lorsque le support est monté sur la partie avant du véhicule, et avec la direction de déplacement lorsque le support est monté sur le guidon de direction,
- un dispositif de protection comprenant une structure de protection gonflable montée sur le support, la structure de protection étant configurée pour former au moins une partie d'un panneau de protection frontale destiné à protéger l'utilisateur selon la première direction,

dans lequel la structure de protection comporte deux montants frontaux solidarisés au support, et le dispositif de protection comprend en outre un filet de protection frontale solidarisé aux montants frontaux, les montants frontaux et le filet de protection frontale formant le panneau de protection frontale,
dans lequel le dispositif de protection présente :
   - tant qu'aucune situation d'accident n'est détectée, un état inactif dans lequel la structure de protection est dégonflée, le panneau de protection frontale étant replié sur le support, les montants frontaux et le filet de protection frontale étant repliés sur le support,
   - lorsqu'une situation d'accident est détectée, un état actif dans lequel la structure de protection est gonflée de telle sorte que panneau de protection frontale s'étende depuis le support perpendiculairement à la première direction en présentant une épaisseur selon la première direction inférieure à une largeur selon une deuxième direction perpendiculaire à la première direction, et à une hauteur selon une troisième direction perpendiculaire aux première et deuxième directions,
le dispositif de protection est configuré pour que dans l'état actif, les montants frontaux s'étendent depuis le support selon la troisième direction et à distance l'un de l'autre selon la deuxième direction, et au moins une partie du filet de protection frontale soit tendue entre les montants frontaux.

Ainsi, l'invention propose un système de protection efficace monté sur le véhicule. En particulier, la structure de protection sert de support pour tendre le filet de protection frontale destiné à recevoir une partie du corps de l'utilisateur, notamment sa tête. Le filet de protection frontale assure ainsi une protection effective permettant de simplifier la conception de la structure de protection et de fiabiliser son déploiement.

La structure de protection peut comprendre en outre au moins une traverse frontale reliant les montants frontaux l'un à l'autre à distance du support.

La structure de protection peut présenter une forme générale de U inversé, la traverse frontale s'étendant selon la deuxième direction entre des extrémités des montants frontaux opposées au support.

Le panneau de protection frontale peut présenter une fenêtre de visualisation adaptée pour permettre à l'utilisateur de voir au travers du panneau de protection frontale.

Le panneau de protection frontale peut être configuré pour présenter une concavité opposée au châssis dans l'état actif du dispositif de protection.

La structure de protection peut être configurée pour former au moins une partie d'au moins un panneau de protection latérale destiné à protéger l'utilisateur selon la deuxième direction, le panneau de protection latérale étant replié sur le support dans l'état inactif du dispositif de protection, et s'étendant depuis le support perpendiculairement à la deuxième direction en présentant une épaisseur selon la deuxième direction inférieure à une largeur selon la première direction et à une hauteur selon la troisième direction.

La structure de protection peut comporter au moins un montant latéral solidarisé au support, et le dispositif de protection peut comprendre en outre un filet de protection latérale solidarisé au montant latéral et à l'un des montants frontaux, le montant latéral, le montant frontal et le filet de protection latérale formant le panneau de protection latérale, et
dans lequel le dispositif de protection est configuré pour que :
- dans l'état inactif, le montant latéral, le montant frontal et le filet de protection latérale soient repliés sur le support, et
- dans l'état actif, le montant latéral s'étende jusqu'à une extrémité libre à distance du support selon la troisième direction et à distance du montant frontal selon la première direction, et au moins une partie du filet de protection latérale soit tendue entre le montant latéral et le montant frontal.

La structure de protection peut comprendre au moins une traverse latérale reliant le montant latéral au montant frontal à distance du support.

Le support peut comprendre un système de fixation configuré pour fixer de manière amovible ledit support à l'emplacement du véhicule. Le système de protection peut ainsi être accroché et décroché du véhicule de manière répétée.

En particulier, le système de protection est portable à la main par l'utilisateur.

Le support peut comprendre un compartiment, le compartiment étant délimité par une paroi latérale périphérique pourvue de rabats souples configurés pour présenter un état fermé dans lequel les rabats sont solidarisés l'un à l'autre pour délimiter un espace de réception, et un état ouvert dans lequel les rabats sont écartés l'un de l'autre, et dans lequel :
- dans l'état inactif du dispositif de protection, les rabats sont dans l'état fermé et la structure de protection est placée dans l'espace de réception, et
- dans l'état actif du dispositif de protection, les rabats sont dans l'état ouvert.

Le filet de protection frontale peut être placé dans l'espace de réception dans l'état inactif du dispositif de protection.

Le filet de protection latérale peut être placé dans l'espace de réception dans l'état inactif du dispositif de protection.

La structure de protection peut être constituée d'au moins une enveloppe délimitant une chambre intérieure, la chambre intérieure étant remplie d'un gaz dans l'état actif du dispositif de protection, et vide dans l'état inactif du dispositif de protection.

Le dispositif de protection peut comprendre au moins un réservoir de gaz et un dispositif d'actionnement connecté au réservoir de gaz et à la structure de protection, le dispositif d'actionnement étant configuré pour détecter une situation d'accident et pour laisser le dispositif de protection dans l'état inactif tant qu'aucune situation d'accident n'est détectée, la structure de protection étant isolée par rapport au réservoir de gaz, et faire passer le dispositif de protection dans l'état actif lorsqu'une situation d'accident est détectée, la structure de protection étant en communication de fluide avec le réservoir de gaz.

Le dispositif d'actionnement peut comprendre un organe de détection à distance d'un obstacle.

L'organe de détection du dispositif d'actionnement peut être configuré pour réaliser une palpation à une distance déterminée du guidon de direction.

De façon complémentaire ou alternative, l'organe de détection du dispositif d'actionnement peut être configuré pour émettre un signal et détecter l'obstacle à partir d'un signal réfléchi.

De façon complémentaire ou alternative, l'organe de détection du dispositif d'actionnement peut être configuré pour détecter un signal sonore tel qu'une commande vocale, un niveau sonore environnant.

De façon complémentaire ou alternative, l'organe de détection du dispositif d'actionnement peut être configuré pour détecter une variation de vitesse ou d'accélération représentative d'une situation d'accident, l'organe de détection étant, par exemple, un ou plusieurs accéléromètres et/ou gyroscopes positionnés sur le support ou le véhicule.

Selon un deuxième aspect, l'invention concerne un véhicule comprenant un système de protection tel que défini ci-dessus, le véhicule comportant un châssis s'étendant selon une direction longitudinale et présentant une partie avant pourvue d'un pivot, et une roue directrice montée pivotante sur le guidon de direction selon un axe de roue perpendiculaire à une direction de déplacement, le guidon de direction étant monté pivotant sur le pivot du châssis pour modifier la direction de déplacement, le support étant monté sur un emplacement du véhicule choisi parmi la partie avant du véhicule et le guidon de direction, la première direction étant confondue avec la direction longitudinale lorsque le support est monté sur la partie avant du véhicule, et avec la direction de déplacement lorsque le support est monté sur le guidon de direction.

Selon un troisième aspect, l'invention concerne une utilisation d'un système de protection tel que défini ci-dessus pour protéger un utilisateur circulant sur un véhicule pourvu d'un guidon de direction, le véhicule comportant un châssis s'étendant selon une direction longitudinale et présentant une partie avant pourvue d'un pivot, et une roue directrice montée pivotante sur le guidon de direction selon un axe de roue perpendiculaire à une direction de déplacement, le guidon de direction étant monté pivotant sur le pivot du châssis pour modifier la direction de déplacement, l'utilisation prévoyant de :
- monter le support sur un emplacement du véhicule choisi parmi la partie avant du véhicule et le guidon de direction, la première direction étant confondue avec la direction longitudinale lorsque le support est monté sur la partie avant du véhicule, et avec la direction de déplacement lorsque le support est monté sur le guidon de direction,
- tant qu'aucune situation d'accident n'est détectée, laisser le dispositif de protection dans l'état inactif dans lequel la structure de protection est dégonflée, le panneau de protection frontale étant replié sur le support, les montants frontaux et le filet de protection frontale étant repliés sur le support,
- lorsqu'une situation d'accident est détectée, faire passer le dispositif de protection dans l'état actif dans lequel la structure de protection est gonflée de telle sorte que le panneau de protection frontale s'étende depuis le support perpendiculairement à la première direction en présentant l'épaisseur inférieure à la largeur et à la hauteur, les montants frontaux s'étendant depuis le support selon la troisième direction et à distance l'un de l'autre selon la deuxième direction, et au moins une partie du filet de protection frontale étant tendue entre les montants frontaux.

### Brève description des dessins

D'autres objets et avantages de l'invention apparaîtront à la lecture de la description qui suit de modes de réalisation particuliers de l'invention donnés à titre d'exemple non limitatif, la description étant faite en référence aux dessins annexés dans lesquels :

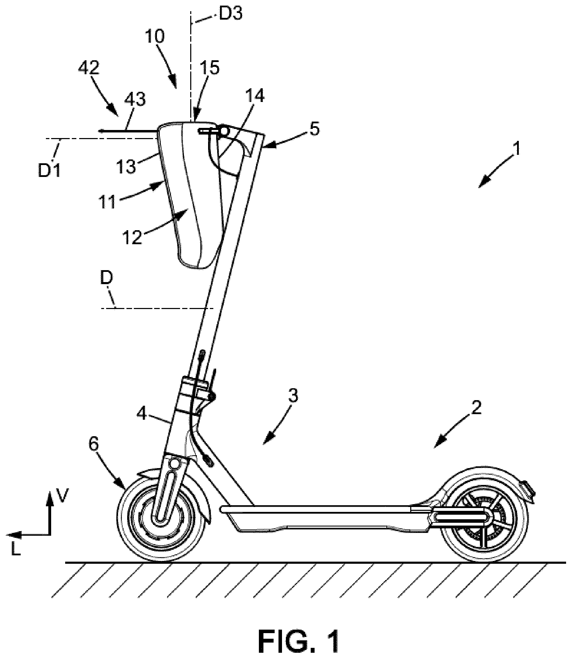

- la figure 1 est une représentation d'un véhicule pourvu d'un guidon de direction comprenant un système de protection selon un premier mode de réalisation de l'invention, le système de protection comprenant un support et un dispositif de protection, le dispositif de protection comprenant une structure de protection gonflable montée sur le support, le dispositif de protection étant dans un état inactif dans lequel la structure de protection est dégonflée et repliée sur le support avec le filet de protection,

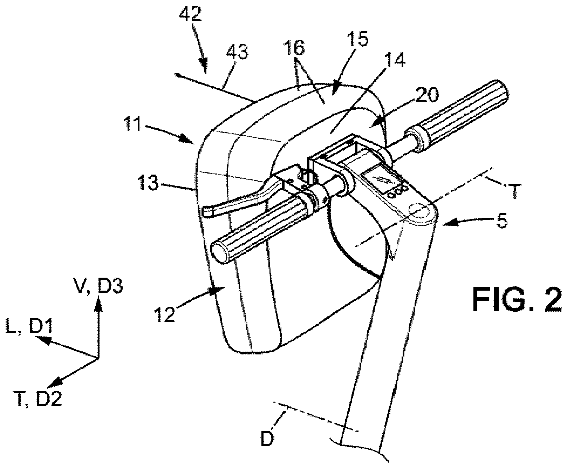

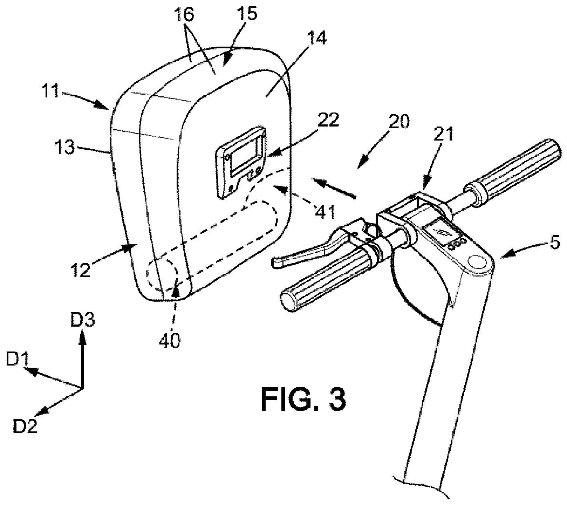

- les figures 2 et 3 sont des représentations du support du système de protection configuré pour être monté de manière amovible sur le guidon de direction du véhicule de la figure 1,

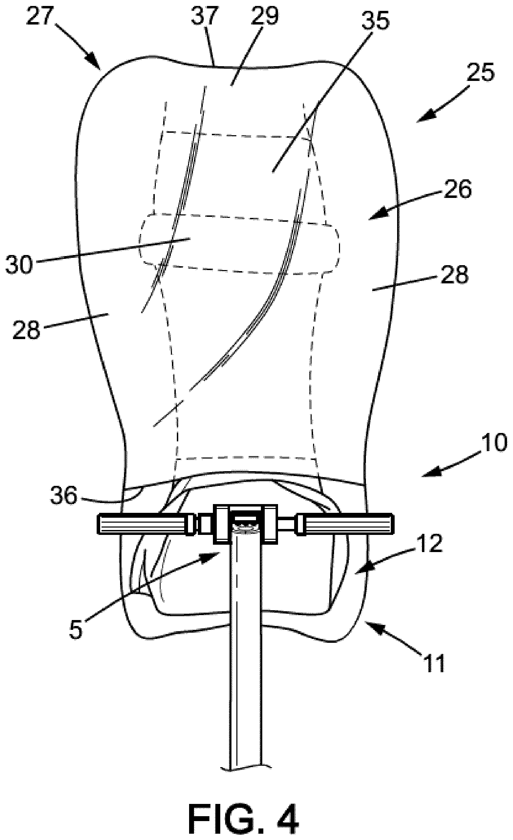

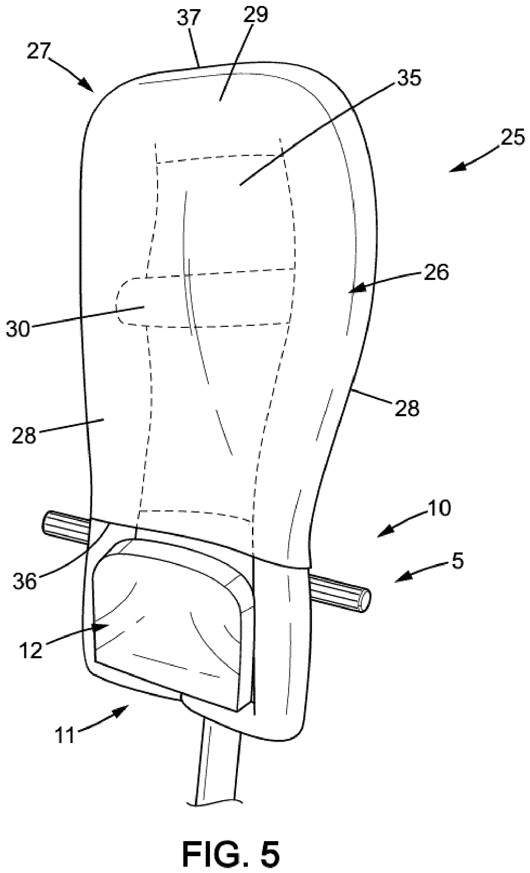

- les figures 4, 5 et 6 sont des représentations respectivement de dos, en perspective de face et latérale du système de protection du véhicule de la figure 1, la structure de protection comportant deux montants frontaux solidarisés au support et le dispositif de protection comprenant un filet de protection frontale solidarisé aux montants frontaux, les montants frontaux et le filet de protection frontale formant un panneau de protection frontale qui s'étend perpendiculairement à la direction de déplacement dans un état actif du dispositif de protection,

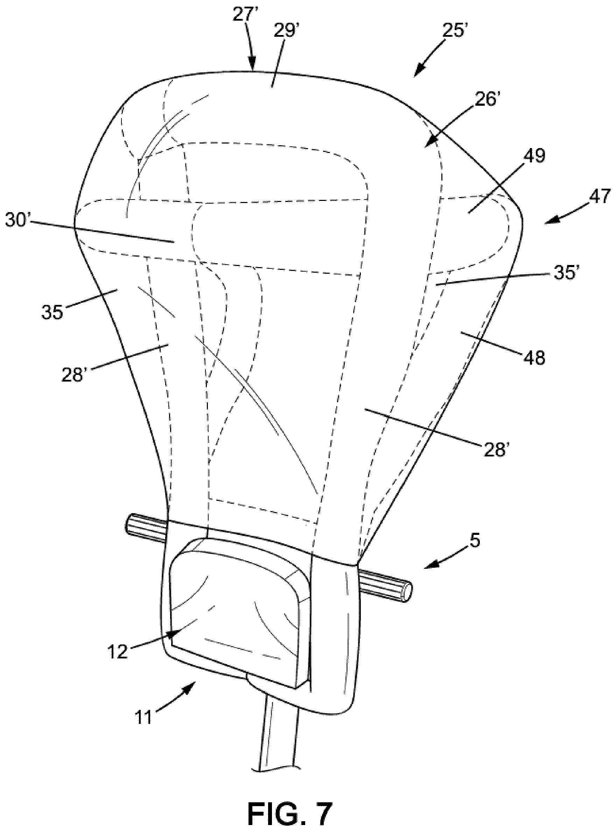

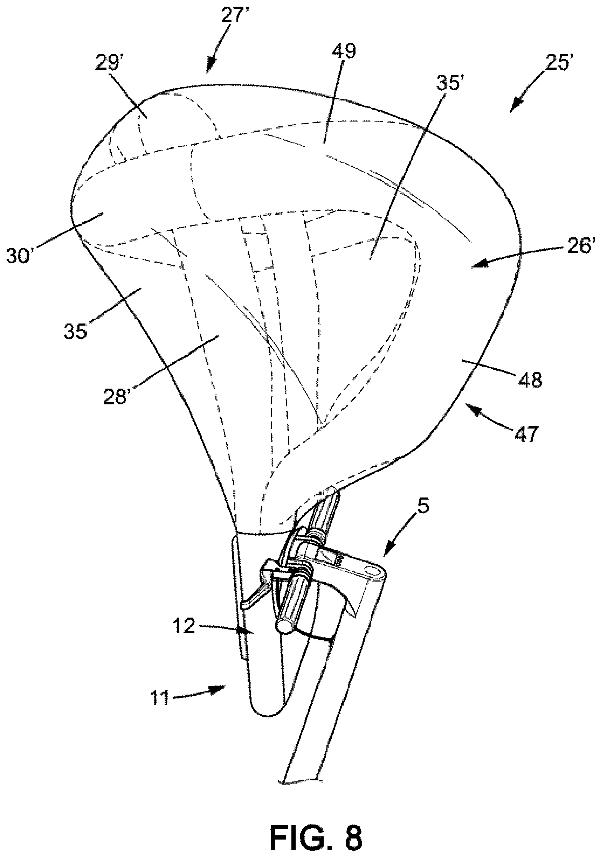

- les figures 7 et 8 sont des représentations respectivement en perspective de face et latérale du système de protection du véhicule de la figure 1 selon un deuxième mode de réalisation, la structure de protection comportant deux montants latéraux solidarisés au support, le dispositif de protection comprenant un filet de protection latérale solidarisé aux montants frontaux et latéraux, chacun des montants latéraux formant avec l'un des montants latéraux et le filet de protection latérale un panneau de protection latérale qui s'étend perpendiculairement à une deuxième direction perpendiculaire à la direction de déplacement dans l'état actif du dispositif de protection.

### Description des modes de réalisation

Sur les figures, les mêmes références désignent des éléments identiques ou analogues.

La figure 1 représente une trottinette 1 comportant un châssis 2 s'étendant selon une direction longitudinale L et présentant une partie avant 3 pourvue d'un pivot 4, un guidon de direction 5 monté pivotant sur le pivot 4 du châssis 2 et une roue directrice 6 montée pivotante sur le guidon de direction 5 selon un axe de roue perpendiculaire à une direction de déplacement D. Un utilisateur peut modifier la direction de déplacement D en tournant le guidon de direction 5. L'invention décrite en relation avec une trottinette 1 s'applique à tout autre véhicule pourvu d'un guidon de direction 5 et tout particulièrement à un vélo mais également une motocyclette, un scooter, une mobylette ou autre.

La trottinette 1 est équipée d'un système de protection 10 de l'utilisateur.

Sur les figures 2 et 3, le système de protection 10 comprend un support 11 présentant une première direction D1 et configuré pour être monté sur le guidon de direction 5 de telle sorte que la première direction D1 soit confondue avec la direction de déplacement D. Le support 11 présente également une deuxième direction D2 perpendiculaire à la première direction et une troisième direction D3 perpendiculaire aux première D1 et deuxième D2 directions et correspondant à une direction verticale V.

En particulier, le support 11 se présente sous la forme d'une sacoche 12 portable à la main par l'utilisateur. La sacoche 12 comprend un compartiment délimité par des parois frontale 13 et dorsale 14 opposées et s'étendant transversalement par rapport à la première direction D1, et une paroi latérale périphérique 15 s'étendant entre les parois frontale 13 et dorsale 14. Une ouverture pourvue d'un système de fermeture réversible est ménagée dans au moins l'une des parois frontale 13, dorsale 14 et latérale périphérique 15 pour accéder au compartiment. La paroi latérale périphérique 15 est pourvue de rabats 16 souples configurés pour présenter un état fermé dans lequel ils sont solidarisés l'un à l'autre pour délimiter un espace de réception, et un état ouvert dans lequel ils sont écartés l'un de l'autre.

Bien que décrite en relation avec un support 11 se présentant sous la forme d'une sacoche 12, l'invention n'est pas limitée à un tel mode de réalisation. Le support 11 pourrait présenter toute autre forme appropriée pour être monté sur le guidon de direction 5 ou sur la partie avant 3 du châssis 2. Le support 11 pourrait notamment se présenter sous la forme d'une bride, d'une plaque, d'un panier ou autre.

Le support 11 comprend un système de fixation 20 configuré pour fixer de manière amovible le support 11 au guidon de direction 5. Le système de fixation 20 comporte un premier élément de fixation 21 monté sur le guidon de direction 5 et un deuxième élément de fixation 22 monté sur la paroi dorsale 14 de la sacoche 12. Les premier 21 et deuxième 22 éléments de fixations sont configurés pour coopérer l'un avec l'autre de manière à fixer de manière réversible la sacoche 12 sur le guidon de direction 5. La sacoche 12 peut ainsi être accrochée et décrochée de la trottinette 1 de manière répétée.

Le système de protection 10 comprend également un dispositif de protection 25 comprenant une structure de protection 26 gonflable montée sur le support 11. Dans les modes de réalisation représentés, la structure de protection 26 est constituée d'une enveloppe unique délimitant une chambre intérieure, la chambre intérieure étant remplie d'un gaz dans l'état actif du dispositif de protection 25, et vide dans l'état inactif du dispositif de protection 25.

Comme représenté en transparence des parois dorsale 14 et latérale périphérique 15 de la sacoche 12, le dispositif de protection comprend un réservoir de gaz 40 et un dispositif d'actionnement 41, mécanique ou électronique, montés sur le support 11 et, en particulier, dans le compartiment de la sacoche 12. Le dispositif d'actionnement 41 est connecté au réservoir de gaz 40 et à la structure de protection 26 et configuré pour détecter une situation d'accident.

Le dispositif d'actionnement 41 peut, par exemple, comprendre un ou plusieurs accéléromètres et/ou gyroscopes positionnés sur le support ou le véhicule pour détecter une variation de vitesse ou d'accélération représentative d'une situation d'accident. Sur les figures 1 et 2, de façon complémentaire ou alternative à une détection mettant notamment en oeuvre un ou plusieurs accéléromètres, le dispositif d'actionnement 41 comprend un organe de détection à distance 42 d'un obstacle situé devant ou sur les côtés le guidon de direction 5. Dans le mode de réalisation représenté, l'organe de détection à distance 42 du dispositif d'actionnement 41 se présente sous la forme d'une antenne 43 configurée pour réaliser une palpation à une distance déterminée en avant du guidon de direction 5. L'organe de détection à distance pourrait toutefois présenter toute autre forme approprié. Il pourrait, par exemple, être configuré pour émettre un signal de toute nature appropriée, et notamment optique, acoustique, électromagnétique ou autre, et détecter l'obstacle à partir d'un signal réfléchi de même nature. De façon complémentaire ou alternative, l'organe de détection du dispositif d'actionnement pourrait être configuré pour détecter un signal sonore tel qu'une commande vocale, un niveau sonore environnant.

Dans ces conditions, tant que le dispositif d'actionnement 41 ne détecte aucune situation d'accident, il maintient le dispositif de protection 25 dans un état inactif dans lequel la structure de protection 26 est dégonflée, isolée par rapport au réservoir de gaz 40 et repliée sur le support 11. En revanche, aussitôt que le dispositif d'actionnement 41 détecte une situation d'accident, il fait passer le dispositif de protection 25 dans un état actif dans lequel la structure de protection 26 est mise en communication de fluide avec le réservoir de gaz 40 pour être gonflée.

En variante, le dispositif de protection 25 pourrait comprendre une structure de protection 26 gonflable constituée de plusieurs enveloppes, et comprenant un ou plusieurs réservoirs de gaz 40 reliés à chacune des enveloppes.

Dans un premier mode de réalisation représenté sur les figures 4 à 6 représentant le dispositif de protection 25 dans l'état actif avec la structure de protection 26 gonflée, la structure de protection 26 forme une partie d'un panneau de protection frontale 27 destiné à recevoir la tête et éventuellement une partie du thorax de l'utilisateur pour le protéger selon la direction longitudinale L, en particulier en cas de choc frontal.

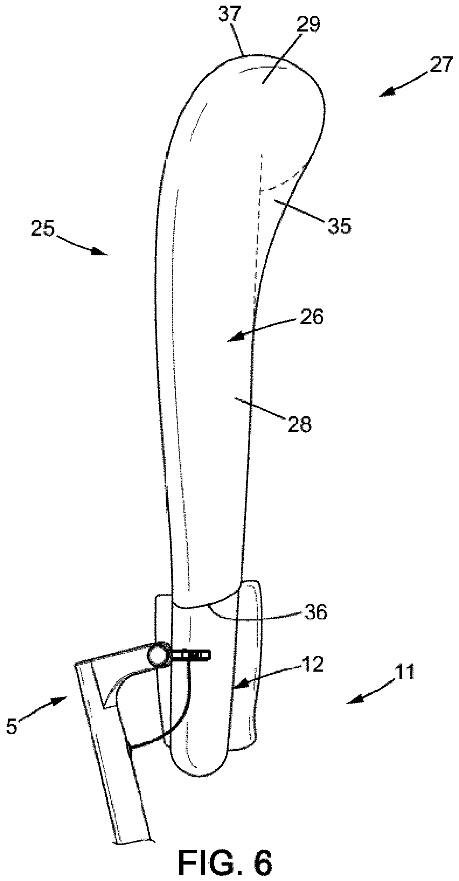

Dans le mode de réalisation particulier représenté, la structure de protection 26 présente une forme générale de U inversé avec deux montants frontaux 28 présentant des extrémités solidarisées au support 11, et une traverse frontale 29 supérieure s'étendant entre des extrémités des montants frontaux 28 opposées au support 11. La structure de protection 26 comprend également une traverse frontale 30 intermédiaire reliant les montants frontaux 28 l'un à l'autre entre le support 11 et la traverse frontale 29 supérieure. Comme représenté sur la figure 6, les montants frontaux 28 sont conformés de telle sorte que la traverse supérieure 29 soit décalée selon la direction longitudinale L par rapport au support 11 en s'éloignant du châssis 2 de la trottinette 1. Le panneau de protection frontale 27 présente alors une concavité opposée au châssis 2 dans l'état actif du dispositif de protection 25.

En variante, le panneau de protection frontale 27 pourrait être dépourvue de traverse frontale ou présenter tout autre agencement d'une ou plusieurs traverses frontales reliant les montants frontaux 28 l'un à l'autre à distance du support 11.

Les extrémités des montants frontaux 28 solidarisées au support 11 forment une base de la structure de protection 26 et la traverse supérieure 29 forme une tête de la structure de protection 26 opposée à la base. Dans le mode de réalisation particulier représenté, la structure de protection 26 peut-être connectée au réservoir de gaz 40 de manière à se déployer depuis la base vers la tête selon la troisième direction D3.

La structure de protection 26 constitue un cadre du panneau de protection frontale 27, globalement rectangulaire et rigidifié par la traverse frontale 30 intermédiaire, sur lequel peut être monté un filet de protection frontale 35. Dans le mode de réalisation particulier représenté, le filet de protection frontale 35 se présente sous la forme d'une chaussette s'étendant entre une première extrémité 36 ouverte et une deuxième extrémité 37 fermée. Le filet de protection frontale 35 peut être mis en place sur la structure de protection 26 par la tête au travers de la première extrémité 36 puis en faisant glisser le filet de protection frontale 35 jusqu'à ce que la première extrémité 36 soit placée au voisinage de la base de la structure de protection 26 et la deuxième extrémité 37 soit placée au voisinage de la tête de la structure de protection 26. En variante, le filet de protection frontale 35 pourrait être solidarisé à la structure de protection de toute autre manière appropriée. Il pourrait par exemple être cousu sur les montants frontaux 28.

La structure de protection 26, du fait de sa conformation tubulaire et de sa concavité, assure une tension du filet de protection frontale 35 dans l'état actif du dispositif de protection 25. En outre, bien que le filet de protection frontale 35 soit perméable, un espace d'air formé entre les montants frontaux 28 améliore la protection de la tête et du thorax de l'utilisateur.

En utilisation, l'utilisateur approchant de la trottinette 1 fixe la sacoche 12 sur le guidon de direction 5 par l'intermédiaire des premier 21 et deuxième 22 éléments de fixation du dispositif de fixation 20. Il monte sur la trottinette 1 et circule sur une voie appropriée.

Tant qu'aucune situation d'accident n'est détectée, le dispositif de protection 25 reste dans l'état inactif dans lequel la structure de protection 26 est dégonflée. Les montants frontaux 28, les traverses frontales supérieure 29 et intermédiaire 30 ainsi que le filet de protection frontale 35 sont repliés dans l'espace de réception entre la paroi latérale périphérique 15 et les rabats 16 dans l'état fermé de la sacoche 12.

Lorsqu'une situation d'accident est détectée, le dispositif d'actionnement 41 fait passer le dispositif de protection 25 dans l'état actif dans lequel la structure de protection 26 est mise en communication de fluide avec le réservoir de gaz 40 et commence à se déployer. Ce faisant, les rabats 16 de la sacoche 12 passent dans l'état ouvert. La structure de protection 26 continue de se déployer jusqu'à ce qu'elle soit entièrement gonflée de telle sorte que les montants frontaux 28 s'étendent depuis le support 11 selon la troisième direction D3 et à distance l'un de l'autre selon la deuxième direction D2, en particulier parallèlement l'un à l'autre. Au moins une partie du filet de protection frontale 35 est alors tendue entre les montants frontaux 28. Les montants frontaux 28, les traverses frontales 29, 30, et le filet de protection frontale 35 forment le panneau de protection frontale 27 s'étendant perpendiculairement à la première direction D1 et dont une épaisseur, mesurée selon la première direction D1, est inférieure à une largeur, mesurée selon la deuxième direction D2, et à une hauteur, mesurée selon la troisième direction D3. Au moment du choc frontal, la tête et le thorax de l'utilisateur peuvent être reçus dans la partie de protection frontale 27.

Dans un autre mode de réalisation, en particulier destiné à être utilisé sur un vélo, le support pourrait être configuré pour être monté sur un autre emplacement du véhicule que le guidon de direction 5, à savoir la partie avant 3 du véhicule. La première direction D1 du support 11 est alors confondue avec la direction longitudinale L et la deuxième direction D2 est confondue avec une direction transversale T du véhicule de sorte que la partie de protection frontale 27 reste perpendiculaire à la direction longitudinale L, y compris lorsque le guidon de direction 5 tourne sous l'effet du choc sur la roue directrice 6. Par ailleurs, bien que décrit sous la forme d'une sacoche 12 fixée de manière amovible sur le guidon de direction 5 ou la partie avant 3 du véhicule, le support 11 pourrait présenter toute autre forme approprié et, le cas échéant, être rigidement fixé au guidon de direction 5 ou à la partie avant 3 du véhicule.

La structure de protection 26 est tubulaire ménageant entre les montants frontaux 28 et les traverses frontales 29, 30 une fenêtre de visualisation qui permet à l'utilisateur de voir au travers du panneau de protection frontale 27. Le filet de protection frontale 35 présentant des mailles n'entrave pas la visibilité de l'utilisateur.

Par ailleurs, en variante, le panneau de protection frontale 27 pourrait être réalisé de toute autre manière appropriée pour présenter une configuration de panneau, à savoir avec une épaisseur inférieure à la largeur et à la hauteur.

Dans un deuxième mode de réalisation représenté sur les figures 7 et 8 représentant le dispositif de protection 25' dans l'état actif avec la structure de protection 26' gonflée, la structure de protection 26' comporte :
- une partie d'un panneau de protection frontale 27', et
- une partie de deux panneaux de protection latérale 47 destinés à protéger l'utilisateur selon la deuxième direction.

Comme dans le premier mode de réalisation, la structure de protection 26' du panneau de protection frontale 27' présente une forme générale de U inversé avec deux montants frontaux 28' et une traverse frontale supérieure 29' s'étendant entre des extrémités des montants frontaux 28' opposées au support 11. Le panneau de protection frontale 27' présente également une concavité opposée au châssis 2 dans l'état actif du dispositif de protection 25'. Un filet de protection frontale 35 est solidarisé aux montants frontaux 28'.

La structure de protection 26' de chaque panneau de protection latérale comporte, quant à elle, un montant latéral 48 présentant une extrémité solidarisée au support au niveau de la base de la structure de protection 26', et s'étendant selon la troisième direction D3 en s'écartant de l'un des montants frontaux 28' vers le châssis 2. Chacun des montants latéraux 48 est ainsi configuré pour s'étendre jusqu'à une extrémité libre à distance du support 11 selon la troisième direction D3 et à distance du montant frontal 28' selon la première direction D2.

La structure de protection 26' de chaque panneau de protection latérale 47 comprend également une traverse latérale 49 supérieure reliant le montant latéral 48 au montant frontal 28' à distance du support 11 et, en particulier dans le mode de réalisation représenté, au niveau d'extrémités opposées au support 11. La structure de protection 26' présente alors une concavité tournée vers l'utilisateur et entourant sensiblement sa tête et son thorax pour lui conférer une protection supplémentaire en cas de choc latéral. Le dispositif de protection comprend en outre un filet de protection latérale 35' qui est enfilé ou cousu sur la structure de protection 26' comme décrit précédemment. Chaque panneau de protection latérale 47 est conformé sous la forme d'un panneau, à savoir avec une épaisseur, mesurée selon la deuxième direction D2, inférieure à une largeur, mesurée selon la première direction D1, et à une hauteur, mesurée selon la troisième direction D3.

Comme pour le premier mode de réalisation, alors que l'utilisateur circule sur la trottinette 1, tant qu'aucune situation d'accident n'est détectée, le dispositif de protection 25' reste dans l'état inactif dans lequel la structure de protection 26' est dégonflée et les montants frontaux 28' et latéraux 48, les traverses latérale 49 et frontale 29' supérieures ainsi que le filet de protection latérale 35' sont repliés dans l'espace de réception entre la paroi latérale périphérique 15 et les rabats 16 dans l'état fermé de la sacoche 12.

Lorsqu'une situation d'accident est détectée, le dispositif d'actionnement 41 fait passer le dispositif de protection 25' dans l'état actif dans lequel la structure de protection 26' est gonflée de telle sorte que le panneau de protection frontale 27' s'étende perpendiculairement à la première direction D1 et les panneaux de protection latérale 47 s'étendent perpendiculairement à la deuxième direction, en regard l'un de l'autre, de part et d'autre du panneau de protection frontale 27'.

Au moment du choc frontal ou latéral, la tête et le thorax de l'utilisateur peuvent être reçus dans au moins l'un des panneaux de protection frontale 27' et latérale 47.

## Revendications

1. Système de protection (10) d'un utilisateur circulant sur un véhicule pourvu d'un guidon de direction (5), le véhicule comportant un châssis (2) s'étendant selon une direction longitudinale (L) et présentant une partie avant (3) pourvue d'un pivot (4), et une roue directrice (6) montée pivotante sur le guidon de direction (5) selon un axe de roue perpendiculaire à une direction de déplacement (D), le guidon de direction (5) étant monté pivotant sur le pivot (4) du châssis (5) pour modifier la direction de déplacement (D), le système de protection (10) comprenant :
- un support (11) présentant une première direction (D1) et configuré pour être monté sur un emplacement du véhicule choisi parmi la partie avant (3) du véhicule et le guidon de direction (5), la première direction (D1) étant confondue avec la direction longitudinale (L) lorsque le support (11) est monté sur la partie avant (3) du véhicule, et avec la direction de déplacement (D) lorsque le support (11) est monté sur le guidon de direction (5),
- un dispositif de protection (25 ; 25') comprenant une structure de protection (26 ; 26') gonflable montée sur le support (11), la structure de protection (26 ; 26') étant configurée pour former au moins une partie d'un panneau de protection frontale (27 ; 27') destiné à protéger l'utilisateur selon la première direction (D1),
dans lequel la structure de protection (26 ; 26') comporte deux montants frontaux (28 ; 28') solidarisés au support (11), et le dispositif de protection (25 ; 25') comprend en outre un filet de protection frontale (35) solidarisé aux montants frontaux (28 ; 28'), les montants frontaux (28 ; 28') et le filet de protection frontale (35) formant le panneau de protection frontale (27 ; 27'),
dans lequel le dispositif de protection (25 ; 25') présente :
- tant qu'aucune situation d'accident n'est détectée, un état inactif dans lequel la structure de protection (26 ; 26') est dégonflée, le panneau de protection frontale (27 ; 27') étant replié sur le support (11), les montants frontaux (28 ; 28') et le filet de protection frontale (35) étant repliés sur le support (11),
- lorsqu'une situation d'accident est détectée, un état actif dans lequel la structure de protection (26 ; 26') est gonflée de telle sorte que le panneau de protection frontale (27 ; 27') s'étende depuis le support (11) perpendiculairement à la première direction (D1) en présentant une épaisseur selon la première direction (D1) inférieure à une largeur selon une deuxième direction (D2) perpendiculaire à la première direction (D1), et à une hauteur selon une troisième direction (D3) perpendiculaire aux première (D1) et deuxième (D2) directions,
le système de protection (10) étant **caractérisé en ce que** le dispositif de protection (25 ; 25') est configuré pour que dans l'état actif, les montants frontaux (28 ; 28') s'étendent depuis le support (11) selon la troisième direction (D3) et à distance l'un de l'autre selon la deuxième direction (D2), et au moins une partie du filet de protection frontale (35) soit tendue entre les montants frontaux (28 ; 28').

2. Système de protection (10) selon la revendication 1, dans lequel les montants frontaux (28 ; 28') sont parallèles entre eux dans l'état actif du dispositif de protection (25 ; 25').

3. Système de protection (10) selon l'une quelconque des revendications 1 et 2, dans lequel la structure de protection (26 ; 26') comprend en outre au moins une traverse frontale (29 ; 29') reliant les montants frontaux (28 ; 28') l'un à l'autre à distance du support (11).

4. Système de protection selon la revendication 3, dans lequel la structure de protection (26 ; 26') présente une forme générale de U inversé, la traverse frontale (29 ; 29') s'étendant selon la deuxième direction (D2) entre des extrémités des montants frontaux (28 ; 28') opposées au support (11).

5. Système de protection (10) selon l'une quelconque des revendications 1 à 4, dans lequel le panneau de protection frontale (27 ; 27') présente une fenêtre de visualisation adaptée pour permettre à l'utilisateur de voir au travers du panneau de protection frontale (27 ; 27').

6. Système de protection (10) selon l'une quelconque des revendications 1 à 5, dans lequel le panneau de protection frontale (27 ; 27') est configuré pour présenter une concavité opposée au châssis (2) dans l'état actif du dispositif de protection (25 ; 25').

7. Système de protection (10) selon l'une quelconque des revendications 1 à 6, dans lequel la structure de protection (26') est configurée pour former au moins une partie d'au moins un panneau de protection latérale (47) destiné à protéger l'utilisateur selon la deuxième direction (D2), le panneau de protection latérale (47) étant replié sur le support (11) dans l'état inactif du dispositif de protection (25'), et s'étendant depuis le support (11) perpendiculairement à la deuxième direction (D2) en présentant une épaisseur selon la deuxième direction (D2) inférieure à une largeur selon la première direction (D1) et à une hauteur selon la troisième direction (D3).

8. Système de protection selon la revendication 7, dans lequel la structure de protection (26') comporte au moins un montant latéral (48) solidarisé au support (11), et le dispositif de protection (25') comprend en outre un filet de protection latérale (35') solidarisé au montant latéral (48) et à l'un des montants frontaux (28'), le montant latéral (48), le montant frontal (28') et le filet de protection latérale (35') formant le panneau de protection latérale (47), et
dans lequel le dispositif de protection (25') est configuré pour que :
- dans l'état inactif, le montant latéral (48), le montant frontal (28') et le filet de protection latérale (35') soient repliés sur le support (11), et
- dans l'état actif, le montant latéral (48) s'étende jusqu'à une extrémité libre à distance du support (11) selon la troisième direction (D3) et à distance du montant frontal (28') selon la première direction (D1),
et au moins une partie du filet de protection latérale (35') soit tendue entre le montant latéral (48) et le montant frontal (28').

9. Système de protection (10) selon la revendication 8, dans lequel la structure de protection (26') comprend au moins une traverse latérale reliant le montant latéral (48) au montant frontal (28') à distance du support (11).

10. Système de protection (10) selon l'une quelconque des revendications 1 à 9, dans lequel le support (11) comprend un système de fixation (20) configuré pour fixer de manière amovible ledit support (11) à l'emplacement du véhicule.

11. Système de protection (10) selon l'une quelconque des revendications 1 à 10, dans lequel le support (11) comprend un compartiment, le compartiment étant délimité par une paroi latérale périphérique (15) pourvue de rabats (16) souples configurés pour présenter un état fermé dans lequel les rabats (16) sont solidarisés l'un à l'autre pour délimiter un espace de réception, et un état ouvert dans lequel les rabats (16) sont écartés l'un de l'autre, et dans lequel :
- dans l'état inactif du dispositif de protection (25 ; 25'), les rabats (16) sont dans l'état fermé et la structure de protection (26 ; 26') est placée dans l'espace de réception, et
- dans l'état actif du dispositif de protection (25 ; 25'), les rabats (16) sont dans l'état ouvert.

12. Système de protection (10) selon l'une quelconque des revendications 1 à 11, dans lequel le dispositif de protection (25 ; 25') comprend au moins un réservoir de gaz (40) et un dispositif d'actionnement (41) connecté au réservoir de gaz (40) et à la structure de protection (26 ; 26'), le dispositif d'actionnement (41) étant configuré pour détecter une situation d'accident et pour laisser le dispositif de protection (25 ; 25') dans l'état inactif tant qu'aucune situation d'accident n'est détectée, la structure de protection (26 ; 26') étant isolée par rapport au réservoir de gaz (40), et faire passer le dispositif de protection (25 ; 25') dans l'état actif lorsqu'une situation d'accident est détectée, la structure de protection (26 ; 26') étant en communication de fluide avec le réservoir de gaz (40), dans lequel le dispositif d'actionnement (41) comprend un organe de détection à distance (42) d'un obstacle, l'organe de détection à distance (42) du dispositif d'actionnement étant configuré pour réaliser une palpation à une distance déterminée du guidon de direction (5).

13. Véhicule comprenant un système de protection (10) selon l'une quelconque des revendications 1 à 12, le véhicule comportant un châssis (2) s'étendant selon une direction longitudinale (L) et présentant une partie avant (3) pourvue d'un pivot (4), et une roue directrice (6) montée pivotante sur un guidon de direction (5) selon un axe de roue perpendiculaire à une direction de déplacement (D), le guidon de direction (5) étant monté pivotant sur le pivot (4) du châssis (2) pour modifier la direction de déplacement (D), le support (11) étant monté sur un emplacement du véhicule choisi parmi la partie avant (3) du véhicule et le guidon de direction (5), la première direction (D1) étant confondue avec la direction longitudinale (L) lorsque le support (11) est monté sur la partie avant (3) du véhicule, et avec la direction de déplacement (D) lorsque le support (11) est monté sur le guidon de direction (5).

14. Utilisation d'un système de protection (10) selon l'une quelconque des revendications 1 à 12 pour protéger un utilisateur circulant sur un véhicule pourvu d'un guidon de direction (5), le véhicule comportant un châssis (2) s'étendant selon une direction longitudinale (L) et présentant une partie avant (3) pourvue d'un pivot (4), et une roue directrice (6) montée pivotante sur le guidon de direction (5) selon un axe de roue perpendiculaire à une direction de déplacement (D), le guidon de direction (5) étant monté pivotant sur le pivot (4) du châssis (2) pour modifier la direction de déplacement (D), l'utilisation prévoyant de :
- monter le support (11) sur un emplacement du véhicule choisi parmi la partie avant (3) du véhicule et le guidon de direction (5), la première direction (D1) étant confondue avec la direction longitudinale (L) lorsque le support (11) est monté sur la partie avant (3) du véhicule, et avec la direction de déplacement (D) lorsque le support (11) est monté sur le guidon de direction (5),
- tant qu'aucune situation d'accident n'est détectée, laisser le dispositif de protection (25 ; 25') dans l'état inactif dans lequel la structure de protection (26 ; 26') est dégonflée, le panneau de protection frontale (27 ; 27') étant replié sur le support, les montants frontaux (28 ; 28') et le filet de protection frontale (35) étant repliés sur le support (11),
- lorsqu'une situation d'accident est détectée, faire passer le dispositif de protection (25 ; 25') dans l'état actif dans lequel la structure de protection (26 ; 26') est gonflée de telle sorte que le panneau de protection frontale (27 ; 27') s'étende depuis le support (11) perpendiculairement à la première direction (D1) en présentant l'épaisseur inférieure à la largeur et à la hauteur, les montants frontaux (28 ; 28') s'étendant depuis le support (11) selon la troisième direction (D3) et à distance l'un de l'autre selon la deuxième direction (D2), et au moins une partie du filet de protection frontale (35) étant tendue entre les montants frontaux (28 ; 28').

## Patentansprüche

1. Schutzsystem (10) für einen Benutzer, der auf einem mit einer Lenkstange (5) versehenen Fahrzeug fährt, wobei das Fahrzeug einen Rahmen (2) aufweist, der sich in einer Längsrichtung (L) erstreckt und einen mit einem Drehzapfen (4) versehenen vorderen Abschnitt (3) aufweist, und ein Lenkrad (6), das an der Lenkstange (5) entlang einer Radachse senkrecht zu einer Bewegungsrichtung (D) schwenkbar angebracht ist, wobei die Lenkstange (5) an dem Drehzapfen (4) des Rahmens (5) schwenkbar angebracht ist, um die Bewegungsrichtung (D) zu ändern, wobei das Schutzsystem (10) umfasst:
- eine Halterung (11), die eine erste Richtung (D1) aufweist und dazu ausgebildet ist, an einer Stelle des Fahrzeugs angebracht zu werden, die aus dem vorderen Abschnitt (3) des Fahrzeugs und der Lenkstange (5) gewählt ist, wobei die erste Richtung (D1) mit der Längsrichtung (L) übereinstimmt, wenn die Halterung (11) am vorderen Abschnitt (3) des Fahrzeugs angebracht ist, und mit der Bewegungsrichtung (D) übereinstimmt, wenn die Halterung (11) an der Lenkstange (5) angebracht ist,
- eine Schutzvorrichtung (25; 25'), umfassend eine aufblasbare Schutzstruktur (26; 26'), die an der Halterung (11) angebracht ist, wobei die Schutzstruktur (26; 26') dazu ausgebildet ist, wenigstens einen Teil einer Frontschutzplatte (27; 27') zu bilden, die dazu gedacht ist, den Benutzer in der ersten Richtung (D1) zu schützen, wobei die Schutzstruktur (26; 26') zwei Frontanbringungen (28; 28') aufweist, die fest mit der Halterung (11) verbunden sind, und wobei die Schutzvorrichtung (25; 25') ferner ein Frontschutznetz (35) aufweist, das fest mit den Frontanbringungen (28; 28') verbunden ist, wobei die Frontanbringungen (28; 28') und das Frontschutznetz (35) die Frontschutzplatte (27; 27') bilden, wobei die Schutzvorrichtung (25; 25') aufweist:
- wenn keine Unfallsituation erkannt wird, einen inaktiven Zustand, in dem die Schutzstruktur (26; 26') nicht aufgeblasen ist, wobei die Frontschutzplatte (27; 27') auf die Halterung (11) gefaltet ist, und die Frontanbringungen (28; 28') und das Frontschutznetz (35) auf die Halterung (11) gefaltet sind,
- wenn eine Unfallsituation erkannt wird, einen aktiven Zustand, in dem die Schutzstruktur (26; 26') aufgeblasen ist, so dass sich die Frontschutzplatte (27 ; 27') von der Halterung (11) senkrecht zur ersten Richtung (D1) erstreckt und eine Dicke in der ersten Richtung (D1) aufweist, die geringer ist als eine Breite in einer zweiten Richtung (D2) senkrecht zur ersten Richtung (D1), und eine Höhe in einer dritten Richtung (D3) senkrecht zur ersten Richtung (D1) und zweiten Richtung (D2),
wobei das Schutzsystem (10) **dadurch gekennzeichnet ist, dass** die Schutzvorrichtung (25; 25') dazu ausgebildet ist, dass sich im aktiven Zustand die Frontanbringungen (28; 28') von der Halterung (11) in der dritten Richtung (D3) und in einem Abstand voneinander in der zweiten Richtung (D2) erstrecken und wenigstens ein Teil des Frontschutznetzes (35) zwischen den Frontanbringungen (28; 28') gespannt ist.

2. Schutzsystem (10) nach Anspruch 1, wobei die Frontanbringungen (28; 28') im aktiven Zustand der Schutzvorrichtung (25; 25') parallel zueinander sind.

3. Schutzsystem (10) nach einem der Ansprüche 1 oder 2, wobei die Schutzstruktur (26; 26') ferner wenigstens einen Frontquerträger (29; 29') aufweist, der die Frontanbringungen (28; 28') im Abstand von der Halterung (11) miteinander verbindet.

4. Schutzsystem nach Anspruch 3, wobei die Schutzstruktur (26; 26') im Allgemeinen eine umgekehrte U-Form aufweist, wobei sich der Frontquerträger (29; 29') in der zweiten Richtung (D2) zwischen den Enden der Frontanbringungen (28; 28') entgegengesetzt von der Halterung (11) erstreckt.

5. Schutzsystem (10) nach einem der Ansprüche 1 bis 4, wobei die Frontschutzplatte (27; 27') ein Sichtfenster aufweist, das derart ausgebildet ist, dass der Benutzer durch die Frontschutzplatte (27; 27') hindurchsehen kann.

6. Schutzsystem (10) nach einem der Ansprüche 1 bis 5, wobei die Frontschutzplatte (27; 27') dazu ausgebildet ist, im aktiven Zustand der Schutzvorrichtung (25; 25') eine Konkavität aufzuweisen, die dem Rahmen (2) gegenüberliegt.

7. Schutzsystem (10) nach einem der Ansprüche 1 bis 6, wobei die Schutzstruktur (26') dazu ausgebildet ist, wenigstens einen Teil wenigstens einer seitlichen Schutzplatte (47) zu bilden, die dazu gedacht ist, den Benutzer in der zweiten Richtung (D2) zu schützen, wobei die Seitenschutzplatte (47) im inaktiven Zustand der Schutzvorrichtung (25') auf die Halterung (11) gefaltet ist und sich von der Halterung (11) senkrecht zur zweiten Richtung (D2) erstreckt, wobei sie eine Dicke in der zweiten Richtung (D2) aufweist, die geringer ist als eine Breite in der ersten Richtung (D1) und eine Höhe in der dritten Richtung (D3).

8. Schutzsystem nach Anspruch 7, wobei die Schutzstruktur (26') wenigstens eine Seitenhalterung (48) aufweist, die fest mit dem Träger (11) verbunden ist, und wobei die Schutzvorrichtung (25') ferner ein Seitenschutznetz (35') aufweist, das fest mit der Seitenhalterung (48) und einer der Frontanbringungen (28') verbunden ist, wobei die Seitenhalterung (48), die Frontanbringung (28') und das Seitenschutznetz (35') die Seitenschutzplatte (47) bilden, und
wobei die Schutzvorrichtung (25') dazu ausgebildet ist, dass:
- im inaktiven Zustand die Seitenhalterung (48), die Frontanbringung (28') und das Seitenschutznetz (35') auf den Träger (11) gefaltet sind, und
- sich die Seitenhalterung (48) im aktiven Zustand zu einem freien Ende erstreckt, das in der dritten Richtung (D3) vom Träger (11) und in der ersten Richtung (D1) von der Frontanbringung (28') entfernt ist, und wenigstens ein Teil des Seitenschutznetzes (35') zwischen der Seitenhalterung (48) und der Frontanbringung (28') gespannt ist.

9. Schutzsystem (10) nach Anspruch 8, wobei die Schutzstruktur (26') wenigstens einen seitlichen Querträger umfasst, der die Seitenhalterung (48) mit der Frontanbringung (28') in einem Abstand von der Halterung (11) verbindet.

10. Schutzsystem (10) nach einem der Ansprüche 1 bis 9, wobei die Halterung (11) ein Befestigungssystem (20) umfasst, das dazu ausgebildet ist, die Halterung (11) lösbar an der Stelle des Fahrzeugs zu befestigen.

11. Schutzsystem (10) nach einem der Ansprüche 1 bis 10, wobei die Halterung (11) ein Fach umfasst, wobei das Fach durch eine umfangmäßige Seitenwand (15) begrenzt ist, die mit flexiblen Klappen (16) versehen ist, die dazu ausgebildet sind, einen geschlossenen Zustand aufzuweisen, in dem die Klappen (16) fest miteinander verbunden sind, um einen Aufnahmeraum zu begrenzen, und einen offenen Zustand aufweisen, in dem die Klappen (16) zueinander beabstandet sind, und wobei:
- sich die Klappen (16) im inaktiven Zustand der Schutzvorrichtung (25; 25') im geschlossenen Zustand befinden und die Schutzstruktur (26; 26') in dem Aufnahmeraum angeordnet ist, und
- sich die Klappen (16) im aktiven Zustand der Schutzvorrichtung (25; 25') im offenen Zustand befinden.

12. Schutzsystem (10) nach einem der Ansprüche 1 bis 11, wobei die Schutzvorrichtung (25; 25') wenigstens einen Gastank (40) und eine Betätigungsvorrichtung (41) umfasst, die mit dem Gastank (40) und der Schutzstruktur (26 ; 26') verbunden ist, wobei die Betätigungsvorrichtung (41) dazu ausgebildet ist, eine Unfallsituation zu erfassen und die Schutzvorrichtung (25; 25') in dem inaktiven Zustand zu belassen, solange keine Unfallsituation erfasst wird, wobei die Schutzstruktur (26 ; 26') von dem Gastank (40) isoliert ist, und die Schutzvorrichtung (25; 25') in den aktiven Zustand zu überführen, wenn eine Unfallsituation erkannt wird,
wobei die Schutzvorrichtung (26; 25') in Fluidverbindung mit dem Gastank (40) steht,
wobei die Betätigungsvorrichtung (41) ein Element (42) zum Erfassen eines Hindernisses auf Abstand umfasst, wobei das Element (42) zum Erfassen auf Abstand der Betätigungsvorrichtung dazu ausgebildet ist, in einem bestimmten Abstand von der Lenkstange (5) eine Abtastung durchzuführen.

13. Fahrzeug, umfassend ein Schutzsystem (10) nach einem der Ansprüche 1 bis 12, wobei das Fahrzeug einen Rahmen (2) aufweist, der sich in einer Längsrichtung (L) erstreckt und einen vorderen Abschnitt (3) mit einem Drehzapfen (4) aufweist, und ein Lenkrad (6), das an einer Lenkstange (5) entlang einer Radachse senkrecht zu einer Bewegungsrichtung (D) schwenkbar angebracht ist,
wobei die Lenkstange (5) schwenkbar an dem Drehzapfen (4) des Rahmens (2) angebracht ist, um die Bewegungsrichtung (D) zu verändern, wobei die Halterung (11) an einer Stelle des Fahrzeugs angebracht ist, die aus dem vorderen Abschnitt (3) des Fahrzeugs und der Lenkstange (5) gewählt ist, wobei die erste Richtung (D1) mit der Längsrichtung (L) übereinstimmt, wenn die Halterung (11) am vorderen Abschnitt (3) des Fahrzeugs angebracht ist, und mit der Bewegungsrichtung (D) übereinstimmt, wenn die Halterung (11) an der Lenkstange (5) angebracht ist.

14. Verwendung eines Schutzsystems (10) nach einem der Ansprüche 1 bis 12 zum Schutz eines Benutzers, der auf einem mit einer Lenkstange (5) versehenen Fahrzeug fährt, wobei das Fahrzeug einen Rahmen (2) aufweist, der sich in einer Längsrichtung (L) erstreckt und einen vorderen Abschnitt (3) aufweist, der mit einem Drehzapfen (4) versehen ist, und ein Lenkrad (6), das an der Lenkstange (5) entlang einer Radachse senkrecht zu einer Bewegungsrichtung (D) schwenkbar angebracht ist, wobei die Lenkstange (5) an dem Drehzapfen (4) des Rahmens (2) schwenkbar angebracht ist, um die Bewegungsrichtung (D) zu ändern, wobei die Verwendung vorsieht, dass:
- die Halterung (11) an einer Stelle des Fahrzeugs angebracht wird, die aus dem vorderen Abschnitt (3) des Fahrzeugs und der Lenkstange (5) gewählt ist, wobei die erste Richtung (D1) mit der Längsrichtung (L) übereinstimmt, wenn die Halterung (11) am vorderen Abschnitt (3) des Fahrzeugs angebracht ist, und mit der Bewegungsrichtung (D) übereinstimmt, wenn die Halterung (11) an der Lenkstange (5) angebracht ist,
- solange keine Unfallsituation erkannt wird, die Schutzvorrichtung (25; 25') im inaktiven Zustand belassen wird, in dem die Schutzstruktur (26; 26') nicht aufgeblasen ist, wobei die Frontschutzplatte (27; 27') auf die Halterung gefaltet ist, und wobei die Frontanbringungen (28; 28') und das Frontschutznetz (35) auf die Halterung (11) gefaltet sind,
- wenn eine Unfallsituation erkannt wird, die Schutzvorrichtung (25; 25') in den aktiven Zustand überführt wird, in dem die Schutzstruktur (26; 26') aufgeblasen ist, so dass sich die Frontschutzplatte (27; 27') von der Halterung (11) senkrecht zur ersten Richtung (D1) erstreckt und die Dicke aufweist, die geringer ist als Breite und Höhe, wobei sich die Frontanbringungen (28; 28') von der Halterung (11) in der dritten Richtung (D3) und mit Abstand zueinander in der zweiten Richtung (D2) erstrecken, und wenigstens ein Teil des Frontschutznetzes (35) zwischen den Frontanbringungen (28; 28') gespannt ist.

## Claims

1. A system (10) for protecting a user traveling on a vehicle provided with a steering handlebar (5), the vehicle including a frame (2) extending according to a longitudinal direction (L) and having a front portion (3) provided with a pivot (4), and a steered wheel (6) pivotally mounted on the steering handlebar (5) according to a wheel axis perpendicular to a direction of movement (D), the steering handlebar (5) being pivotally mounted on the pivot (4) of the frame (5) to modify the direction of movement (D), the protection system (10) comprising:
- a support (11) having a first direction (D1) and configured to be mounted on a location of the vehicle selected amongst the front portion (3) of the vehicle and the steering handlebar (5), the first direction (D1) being coincident with the longitudinal direction (L) when the support (11) is mounted on the front portion (3) of the vehicle, and with the direction of movement (D) when the support (11) is mounted on the steering handlebar (5),
- a protection device (25; 25') comprising an inflatable protective structure (26; 26') mounted on the support (11), the protective structure (26; 26') being configured to form at least one portion of a front protective panel (27; 27') intended to protect the user according to the first direction (D1),
wherein the protective structure (26; 26') includes two front posts (28; 28') secured to the support (11), and the protection device (25; 25') further comprises a front protective net (35) secured to the front posts (28; 28'), the front posts (28; 28') and the front protective net (35) forming the front protective panel (27; 27'),
wherein the protection device (25; 25') has:
- as long as no accident situation is detected, an inactive state in which the protective structure (26; 26') is deflated, the front protective panel (27; 27') being folded over the support (11), the front posts (28; 28') and the front protective net (35) being folded over the support (11),
- when an accident situation is detected, an active state in which the protective structure (26; 26') is inflated such that the front protective panel (27; 27') extends from the support (11) perpendicularly to the first direction (D1) while having a thickness according to the first direction (D1) smaller than a width according to a second direction (D2) perpendicular to the first direction (D1), and a height according to a third direction (D3) perpendicular to the first (D1) and second (D2) directions,
the protection system (10) being **characterised in that** the protection device (25; 25') is configured so that in the active state, the front posts (28; 28') extend from the support (11) according to the third direction (D3) and at a distance from each other according to the second direction (D2), and at least one portion of the front protective net (35) is stretched between the front posts (28; 28').

2. The protection system (10) according to claim 1, wherein the front posts (28; 28') are parallel to each other in the active state of the protection device (25; 25').

3. The protection system (10) according to any one of claims 1 and 2, wherein the protective structure (26; 26') further comprises at least one front crosspiece (29; 29') connecting the front posts (28; 28') to each other at a distance from the support (11).

4. The protection system according to claim 3, wherein the protective structure (26; 26') has an inverted U like general shape, the front crosspiece (29; 29') extending according to the second direction (D2) between ends of the front posts (28; 28') opposite to the support (11).

5. The protection system (10) according to any one of claims 1 to 4, wherein the front protective panel (27; 27') has a viewing window adapted to enable the user to see throughout the front protective panel (27; 27').

6. The protection system (10) according to any one of claims 1 to 5, wherein the front protective panel (27; 27') is configured to have a concavity opposite to the frame (2) in the active state of the protection device (25; 25').

7. The protection system (10) according to any one of claims 1 to 6, wherein the protective structure (26') is configured to form at least one portion of at least one lateral protective panel (47) for protecting the user according to the second direction (D2), the lateral protective panel (47) being folded over the support (11) in the inactive state of the protection device (25'), and extending from the support (11) perpendicularly to the second direction (D2) while having a thickness according to the second direction (D2) smaller than a width according to the first direction (D1) and a height according to the third direction (D3).

8. The protection system according to claim 7, wherein the protective structure (26') includes at least one lateral post (48) secured to the support (11), and the protection device (25') further comprises a lateral protective net (35') secured to the lateral post (48) and to one of the front posts (28'), the lateral post (48), the front post (28') and the lateral protective net (35') forming the lateral protective panel (47), and wherein the protection device (25') is configured so that:
- in the inactive state, the lateral post (48), the front post (28') and the lateral protective net (35') are folded over the support (11), and
- in the active state, the lateral post (48) extends up to a free end at a distance from the support (11) according to the third direction (D3) and at a distance from the front post (28') according to the first direction (D1), and at least one portion of the lateral protective net (35') is stretched between the lateral post (48) and the front post (28').

9. The protection system (10) according to claim 8, wherein the protective structure (26') comprises at least one lateral crosspiece connecting the lateral post (48) to the front post (28') at a distance from the support (11).

10. The protection system (10) according to any one of claims 1 to 9, wherein the support (11) comprises a fastening system (20) configured to removably fasten said support (11) to the location of the vehicle.

11. The protection system (10) according to any one of claims 1 to 10, wherein the support (11) comprises a compartment, the compartment being delimited by a peripheral lateral wall (15) provided with flexible flaps (16) configured to present a closed state in which the flaps (16) are secured to each other to delimit a receiving space, and an open state in which the flaps (16) are separated from each other, and wherein:
- in the inactive state of the protection device (25; 25'), the flaps (16) are in the closed state and the protective structure (26; 26') is placed in the receiving space, and
- in the active state of the protection device (25; 25'), the flaps (16) are in the open state.

12. The protection system (10) according to any one of claims 1 to 11, wherein the protection device (25; 25') comprises at least one gas tank (40) and an actuation device (41) connected to the gas tank (40) and to the protective structure (26; 26'), the actuation device (41) being configured to detect an accident situation and to leave the protection device (25; 25') in the inactive state as long as no accident situation is detected, the protective structure (26; 26') being isolated with respect to the gas tank (40), and make the protection device (25; 25 ') switch in the active state when an accident situation is detected, the protective structure (26; 26') being in fluid communication with the gas tank (40),
wherein the actuation device (41) comprises a member (42) for remotely detecting an obstacle, the remote detection member (42) of the actuation device being configured to carry out a palpation at a determined distance from the steering handlebar (5).

13. A vehicle comprising a protection system (10) according to any one of claims 1 to 12, the vehicle including a frame (2) extending according to a longitudinal direction (L) and having a front portion (3) provided with a pivot (4), and a steered wheel (6) pivotally mounted on a steering handlebar (5) according to a wheel axis perpendicular to a direction of movement (D), the steering handlebar (5) being pivotally mounted on the pivot (4) of the frame (2) to modify the direction of movement (D), the support (11) being mounted on a location of the vehicle selected amongst the front portion (3) of the vehicle and the steering handlebar (5), the first direction (D1) being coincident with the longitudinal direction (L) when the support (11) is mounted on the front portion (3) of the vehicle, and with the direction of movement (D) when the support (11) is mounted on the steering handlebar (5).

14. A use of a protection system (10) according to any one of claims 1 to 12 for protecting a user traveling on a vehicle provided with a steering handlebar (5), the vehicle including a frame (2) extending according to a longitudinal direction (L) and having a front portion (3) provided with a pivot (4), and a steered wheel (6) pivotally mounted on the steering handlebar (5) according to a wheel axis perpendicular to a direction of movement (D), the steering handlebar (5) being pivotally mounted on the pivot (4) of the frame (2) to modify the direction of movement (D), the use providing for:
- mounting the support (11) on a location of the vehicle selected amongst the front portion (3) of the vehicle and the steering handlebar (5), the first direction (D1) being coincident with the longitudinal direction (L) when the support (11) is mounted on the front portion (3) of the vehicle, and with the direction of movement (D) when the support (11) is mounted on the steering handlebar (5),
- as long as no accident situation is detected, leaving the protection device (25; 25') in the inactive state in which the protective structure (26; 26') is deflated, the front protective panel (27; 27') being folded over the support, the front posts (28; 28') and the front protective net (35) being folded over the support (11),
- when an accident situation is detected, making the protection device (25; 25') switch in the active state in which the protective structure (26; 26') is inflated such that the front protective panel (27; 27') extends from the support (11) perpendicularly to the first direction (D1) while having the thickness smaller than the width and the height, the front posts (28; 28') extending from the support (11) according to the third direction (D3) and at a distance from each other according to the second direction (D2), and at least one portion of the front protective net (35) being stretched between the front posts (28; 28').
